Europäisches Patentamt

European Patent Office

Office européen des brevets

(11) Publication number: **0 365 102**
**A1**

## EUROPEAN PATENT APPLICATION

(21) Application number: **89202645.1**

(22) Date of filing: **19.10.89**

(51) Int. Cl.5: **B65B 27/10 , B65G 47/14**

(30) Priority: **21.10.88 IT 2239388**

(43) Date of publication of application:
**25.04.90 Bulletin 90/17**

(84) Designated Contracting States:
**AT BE CH DE ES FR GB LI SE**

(71) Applicant: **CASAGRANDE SpA**
**Viale Venezia, 97**
**I-33074 Fontanafredda (PN)(IT)**

(72) Inventor: **Mansutti, Franco**
**Via M. Buonarroti, 5**
**I-33010 Feletto Umberto (Udine)(IT)**
Inventor: **Casagrande, Bruno**
**Via Malignani, 3**
**I-33074 Fontanafredda (Pordenone)(IT)**

(74) Representative: **Faraggiana, Vittorio, Dr. Ing.**
**Ingg. Guzzi e Ravizza S.r.l. Via Boccaccio, 24**
**I-20123 Milano(IT)**

(54) **High-productivity bar transfer system.**

(57) Bar (10) collection, transfer, counting and tieing system (1) profitably for steel bars coming from a cutting-to-size station or from a collection container (3) comprising first means (2) of bar (10) transfer, second means (17) for separating groups of bars (10), third means (25) for transfer of groups of bars (10), fourth means (26) of separation of individual bars (10), fifth means (30) of transfering individual bars, sixth means (31) of counting bars (10) comprising in addition a container (33) rotating around an axle (34), said container (33) being provided with a plurality of pockets for collection of bundles of bars (10), the rotation of said container (33) being controlled by a signal emitted by said sixth means (31) of counting bars (10), said container (33) working also with seventh means (36) of supporting bars (10) designed to support transiently a bundle of bars (10) coming from said container (33), said seventh means (36) working with one or more tieing machines and being designed to deposit, once the tieing operation has been completed, a bundle of bars (10) on eighth means (38) of evacuating bundles of bars.

# High-productivity bar transfer system

The invention relates to a high-productivity bar transfer system.

Specifically the invention relates to a bar collection, transfer, counting and tieing system comprising a device designed to take steel bars from a transfer device working with cutting-to-size equipment or a bundle of bars from storage, transfer and separate said bars from each other, count said bars, deposit said bars in a collection pocket and transfer them later, once a bundle containing a predetermined number of said bars is formed in said collection pocket, to a bundle-support device working together with one or more bundle-tieing machines.

Said support device is also designed to deposit the tied bundle on an evacuation device.

There is known in the art a bar collection, transfer and counting system in which, in order to form a bundle of bars to be subsequently tied, there is provided a bar-counting device comprising a hydraulic motor and a series of gear-wheels of which the first is for conveyance and feeding of the bars one by one to a counting wheel.

The relative motion of the gear-wheels is brought about in such a manner that while the feed wheel is moving the counting wheel is stopped and vice versa.

The bars are counted by a photoelectric cell actuated each time a bar passes across the counter.

The impulses are recorded by an electronic counter which stops feed once a predetermined number of bars is reached.

The bars thus counted form a bundle in a container which is subsequently evacuated by means of a conveyor belt and sent to an outside bundle tieing station.

This type of system has drawbacks because it does not provide specific means of rearranging in an orderly manner the bar bundles arriving from storage with overlain bars which must necessarily be presented one by one to the counting device.

The system must therefore be stopped repeatedly to place in order the disorderly bars and this results in low productivity.

In addition the bar-counting device calls for changing the entire set of gear-wheels every time the bar diameter changes.

This involves high costs and low flexibility in application in addition to low productivity of the bar collection, transfer and counting system in which said device is inserted.

In addition said system is unprofitable because it requires an outside bundle tieing station connected to the system by a belt conveyor.

This situation is incompatible with the production speeds imposed by modern installations which must be able to produce for example a quantity of 80 tonnes per hour of bars having a diameter of 9.5mm said bars being divided in bundles of approximately 300 bars each.

Each bundle must therefore be produced and tied in less than 1'30".

The abovedescribed system, not being equipped with a tieing machine placed at the head of said system, cannot maintain output of the type mentioned.

The present invention aims at obviating the drawbacks of the known art and feeding a bar collection, transfer, counting and tieing system capable of high productivity.

This is provided by a system having the characteristics described in claim 1.

The subordinate claims delineate preferred embodiments of the invention.

A nonlimiting example of an embodiment of the invention is described in detail below with the help of the annexed figure.

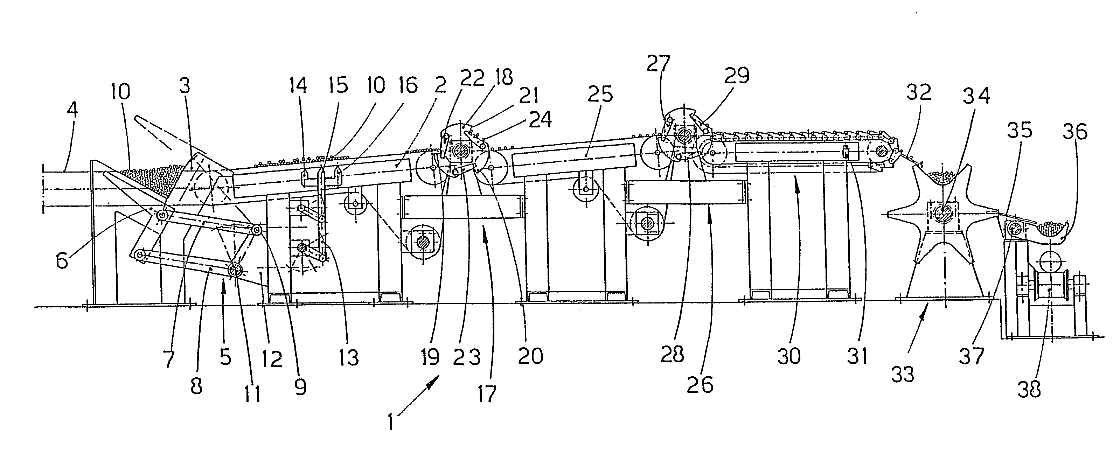

In the figure reference number 1 indicates a bar 10 collection, transfer, counting and tieing system in accordance with the invention.

It comprises a first transfer device 2 with shaped plates working, depending on the application, with a pocket 3 for containing the bars 10 coming from storage or with a conveyor belt 4 on which are present bars 10 coming from a cutting-to-size device (not shown) placed upstream of the system 1.

The pocket 3 for collecting bars 10 coming from storage works together with a device 5 for lifting bars 10 comprising in general a pair of bar lifting arms 6.

Said arms 6 consist each of an L-shaped bar, one arm of which acts as the bar lifter and the other bar of which works with two levers 7, 8 pivoted at points 9 and 11 on a fixed upright 12.

The purpose of the device 5 is to slowly lift the bundle of bars in the collection pocket 3 by means of a clockwise rotation of the arm 6 around the pins 9 and 11 in such a manner that due to the effect of gravity the bars 10 are deposited singly or in small groups of overlain bars on the transfer device 2.

With the transfer device 2 there works in turn a device termed "extricator" 13 comprising a series of rising pointed arms 14, 15 and 16 designed to insert themselves transiently under the groups of bars 10 present on the transfer device 2 to effect another separation of the bars.

It may also be seen that the transfer device 2 is slightly sloping to facilitate separation of the bars 10 from each other.

Immediately downstream from the transfer device 2 there is a first bar separation device 17. Said device 17 comprises a cylinder 18 shaped in such a manner as to present a series of notches 19, 20 and 21 each designed to receive a predetermined but variable number of bars depending on the position of the adjusting blades 22, 23 and 24.

Rotation of the cylinder 18 brings about the periodic taking of small series of bars 10 from the transfer device 2 and deposit thereof on a second transfer device 25 having shaped plates which guides the bars 10 to a second bar 10 separation device 26.

Said second bar 10 separation device 26 has a structure similar to that described with reference to the first separation device 17.

It is however provided with smaller notches in each of which a single bar 10 is inserted.

In this case the purpose of the adjusting blades 27, 28 and 29 is to adapt the depth of the notch to the diameter of the bar being processed.

Rotation of the device 26 brings about the taking of individual bars 10 from the transfer device 25 and deposit thereof on a third transfer device 30 having toothed plates.

The bars 10 deposited on said transfer device 30 are then traversed at high speed, e.g. approximately 2 metres per second, and at the same time counted by means of an electric bar-counting device 31 which can be of various types such as for example with a photoelectric cell or a microswitch.

Next the counted bars 10 are deposited in a slide 32 and reach a star-shaped containing device 33.

Said star-shaped containing device 33 comprises a plurality of pockets (in this case six pockets) rotating around an essentially horizontal axle 34.

In accordance with the invention once the bar counter 31 has counted the number of bars necessary to make up a bundle, e.g. 300, it sends a signal which causes rapid rotation of the device 33, in this case in a 60-degree arc.

Consequently the bundle of bars 10 in a pocket of the device 33 is deposited on the slide 35 and then reaches a bundle support device 36.

Meanwhile another pocket (empty) of the device 33 is positioned below the slide 32 and is designed to receive the bars 10 again counted by the bar counter 31.

The bundle support device 36 comprises a series of arms shaped to support a bundle and pivoted at one end 37 rotating around a horizontal axis.

Said device 36 works with one or more tieing machines (not shown in the figure) which in the presence of a bundle on the support device 36 bring about immediate tieing of said bundle.

Next the device 36 is rotated around the axis 37 and the tied bundle is deposited on a roller conveyor 38 for evacuation.

The invention permits achievement of very high processing speeds.

For example it may be seen that a bundle of 300 bars of diameter 9.5mm is produced, tied and evacuated in less than 1'30".

The invention is not limited to the embodiment described above and comprises numerous variants falling within its object.

As an example the star-shaped containing device 33 can comprise any number of bundle collection pockets depending on production requirements. The rotating separation devices can be shaped differently from those described above. Other types of bar counters of mechanical, electrical or electronic type can be used.

These and other variants within the field of electromechanical equivalences fall within the object of the invention.

## Claims

1. Bar (10) collection, transfer, counting and tieing system (1) profitably for steel bars coming from a cutting-to-size station or from a collection container (3) characterized in that it comprises first means (2) of bar (10) transfer, second means (17) for separating groups of bars (10), third means (25) for transfer of groups of bars (10), fourth means (26) of separation of individual bars (10), fifth means (30) of transfering individual bars, sixth means (31) of counting bars (10) comprising in addition a container (33) rotating around an axle (34), said container (33) being provided with a plurality of pockets for collection of bundles of bars (10), the rotation of said container (33) being controlled by a signal emitted by said sixth means (31) of counting bars (10), said container (33) working also with seventh means (36) of supporting bars (10) designed to support transiently a bundle of bars (10) coming from said container (33), said seventh means (36) working with one or more tieing machines and being designed to deposit, once the tieing operation has been completed, a bundle of bars (10) on eighth means (38) of evacuating bundles of bars.

2. System in accordance with claim 1 characterized in that said collection container (3) works with a bar lifting device (5).

3. System in accordance with claim 2 characterized in that said device (5) for lifting bars (10) comprises a series of lifting arms (6).

4. System in accordance with one of the above claims characterized in that said first means (2) of transfer of bars (10) comprise a transfer belt with shaped plates whose work surface is arranged on a plane oblique in relation to the horizontal.

5. System in accordance with claim 4 characterized in that said first means (2) work transiently with an extricator device (13) designed to separate groups of bars (10).

6. System in accordance with one of the above claims characterized in that said second means (17) comprise a cylinder (18) having a plurality of notches (19, 20, 21) each designed to receive groups of bars (10) having a predetermined number of bars.

7. System in accordance with claim 6 characterized in that the adjusting blades (22, 23, 24) work with said notches (19, 20, 21).

8. System in accordance with one of the above claims characterized in that said third means (25) of transferring groups of bars comprise a belt transfer device with shaped plates whose work surface is arranged on a plane oblique to the horizontal.

9. System in accordance with one of the above claims characterized in that said fourth means (26) comprise a cylinder having a plurality of notches each designed to receive a single bar.

10. System in accordance with claim 9 characterized in that bar diameter adjusting blades (27, 28, 29) work with said notches.

11. System in accordance with one of the above claims characterized in that said fifth means (30) comprise a transfer device with toothed plates.

12. System in accordance with one of the above claims characterized in that said sixth means (31) comprise a mechanical and/or electrical and/or electronic bar counting device.

13. System in accordance with one of the above claims characterized in that said seventh means (36) comprises a device with support arms rotating around a horizontal axis (37).

14. System in accordance with one of the above claims characterized in that said eighth means (38) comprise a roller conveyor for evacuation of the bundles of bars (10).

15. System in accordance with one of the above claims characterized in that said rotating container (33) works with a first slide (32) for feeding bars (10) and with a second slide (35) for evacuation of bundle of bars (10).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-B-1 091 483 (SPOONER DRYER) * Column 5, line 25 - column 6, line 51; figures 1,3 * | 1 | B 65 B 27/10 B 65 G 47/14 |
| A | DE-A-1 812 430 (MORGAN) * Page 4, line 4 - page 8, line 5; figure 1 * | 1,12,13 ,15 | |
| A | US-A-3 127 829 (ROSSI) | | |

TECHNICAL FIELDS SEARCHED (Int. Cl.5)

B 65 B
B 65 G

The present search report has been drawn up for all claims

| Place of search | Date of completion of the search | Examiner |
|---|---|---|
| THE HAGUE | 23-01-1990 | CLAEYS H.C.M. |

EPO FORM 1503 03.82 (P0401)